# EUROPEAN PATENT SPECIFICATION

(11) **EP 3 248 492 B1**
(45) Date of publication and mention of the grant of the patent: **08.05.2019**
(21) Application number: 17172472.7
(22) Date of filing: 23.05.2017
(51) Int. Cl.: A43B 9/12, A43B 9/16, A43B 9/20, B29D 35/10

(54) **METHOD AND SYSTEM FOR AUTOMATICALLY MANUFACTURING SHOES**
VERFAHREN UND SYSTEM ZUM AUTOMATISCHEN HERSTELLUNG VON SCHUHEN
PROCÉDÉ ET SYSTÈME DE FABRICATION AUTOMATIQUE DE CHAUSSURES

(30) Priority: 24.05.2016 DE 102016208998
(43) Date of publication of application: 29.11.2017
(73) Proprietor: adidas AG, 91074 Herzogenaurach (DE)
(72) Inventor: MANZ, Gerd Rainer, 91074 Herzogenaurach (DE); LE, Huu Minh Tru, 91074 Herzogenaurach (DE); LANDECK, Carsten, 91074 Herzogenaurach (DE); HILL, Jan, 91074 Herzogenaurach (DE); DYCKMANS, Clemens Paul, 91074 Herzogenaurach (DE); PRICE, Daniel Stephen, 91074 Herzogenaurach (DE); SMITH, Paul Leonard Michael, 91074 Herzogenaurach (DE); HOLMES, Christopher Edward, 91074 Herzogenaurach (DE)
(74) Representative: Wegner, Hans

(56) References cited:
- US-A1- 2013 125 319

## Description

### 1. Technical field

The present invention relates to a method for automatically manufacturing shoes. Moreover, the present invention relates to a system for performing such a method.

### 2. Description of the prior art

Conventional methods for manufacturing shoes generally involve processing various components such as premanufactured soles and uppers at different processing stations, which are then later joined in a further, separate location. The production methods of the prior art are typically very complicated and labor intensive so that most of the shoe production is nowadays performed in the Far East, where labor costs are low.

To overcome these disadvantages applicant disclosed already in DE 10 2013 221 018 A1 and in DE 10 2013 221 020 A1 various methods and apparatuses for producing a plurality of shoes. For example, one method includes several steps performed at different processing stations which are connected by conveyer belts. The disclosed methods process shoe components such as three-dimensionally preformed uppers and premanufactured soles obtained from a storage place for eventually manufacturing the complete shoe.

EP 2 786 670 A1 discloses a method for manufacturing a shoe sole from particles, wherein the individual steps of the method are carried out at various processing stations of a production facility. While the disclosed facility somewhat improves the productivity of the overall process, it concerns only the manufacture of the shoe sole from particles.

A common disadvantage of the disclosed production methods is that the overall production of shoes is still very complicated and labor intensive. Therefore, the underlying problem of the present invention is to provide an improved method and system for the manufacture of shoes, in order to at least partly overcome the above mentioned deficiencies of the prior art.

Further prior art is disclosed in EP 2 564 719 A1, GB 1 439 101 A, and in US 2014 / 0 189 964 A1.

US 2013/125319 A1 relates to manufacturing of a shoe or a portion of a shoe by executing various shoe-manufacturing processes in an automated fashion. For example, information describing a shoe part may be determined, such as an identification, an orientation, a color, a surface topography, an alignment, a size, etc. Based on the information describing the shoe part, automated shoe-manufacturing apparatuses may be instructed to apply various shoe-manufacturing processes to the shoe part. as to finish the manufacture of a whole shoe, thus contributing to the overall automatization of the process. To further facilitate the automatization, the joining

### 3. Summary of the invention

The above mentioned problem is solved by the invention, disclosed by independent claim 1. Preferred embodiments of the invention are disclosed in the depending claims.

The present invention provides for the first time a truly automated method for the manufacture of a plurality of complete shoes. The term "automated" or "automatically" designates a process, which occurs without human intervention apart from setting up and / or correcting malfunctions. The manufacturing of the two key components of a shoe, namely the sole and the upper, by two stations operating in parallel significantly simplifies the overall manufacture. In contrast to the prior art, all key components are manufactured in a common facility. Productions delays due to supply difficulties of premanufactured components can be avoided.

In an embodiment, the transportation to the joining station is automated.

Thus, the two components can also be automatically transported from the two manufacturing stations to a joining station in order to be automatically joined there so station can also be arranged in the common facility. As a result, the overall process time, the labor costs as well as the transport costs are significantly reduced.

However, in different embodiments, the transportation to the joining station may also be semi-automated or be performed manually, for example if the production site does not allow a fully automated transportation from the first and/or second manufacturing station to the joining station or if the joining station is not arranged within the common facility.

A first number of soles manufactured in step (a) corresponds to a second number of uppers manufactured in step (b). Moreover, the correspondence between the first number and the second number takes a percentage of defective soles and / or defective uppers into account. In contrast to conventional methods for manufacturing shoes, wherein the shoe components are largely independently manufactured in different facilities and then stored in a storage facility, this aspect of the present invention significantly streamlines the whole manufacturing process. Especially because percentages of defective components are taken into account, the overall manufacturing can be executed more efficiently which reduces down times and a surplus of unused shoe components at any given point in time.

In one embodiment, the step of automatically manufacturing the plurality of soles in the first station comprises molding individual soles from a plurality of particles. While other sole manufacturing techniques might be used as well, molding individual soles from a plurality of particles is a particularly efficient method for the automated manufacture of shoe soles. Moreover, the inventors of the present invention have for the first time realized that this sole manufacturing method integrates particularly well into the automated manufacture of the overall shoe according to the present invention. One reason is that a manufacture of a soles by molding particles does not involve toxic or hazardous materials, which greatly facilitates the combination of the sole manufacture with the manufacture of the upper in a common facility.

In one embodiment, an automated quality check of the manufactured soles is performed, for example in the first manufacturing station or along the way from the first manufacturing station to the joining station or at another point in the process flow.

The quality check may involve an automated inspection of the molded particles in the manufactured sole. The automated quality check may involve an automated measurement of the weight and / or the size of the manufactured sole. Dynamic properties such as cushioning, stiffness or flexing properties of the manufactured sole may also be automatically investigated.

Integrating such an automated quality check already into the first station further improves the automated manufacture of shoe soles. If the manufactured sole is partly defective, for example due to an undesired weight and/or size, the automated quality check may detect and remove such a sole already at an early stage of the manufacturing process. As a result, the error rate of the overall manufacturing process of a shoe is significantly reduced.

The step of automatically joining the manufactured sole and the manufactured upper in the joining station may be performed by means of applying heat. Moreover, the step may be performed without an adhesive, preferably by directly welding the material of the upper onto the material of the sole. For example, the material of the sole and the material of the upper may comprise material from the same material class such a thermoplastic polyurethane, TPU. In such an embodiment, there is no need for adhesives because the materials can connect to each other by forming molecular bonds when applying heat. For example, DE 10 2015 202 014 A1 discloses a method that allows bonding two components by providing heat energy to connection surfaces of the components without contact, wherein the method may be performed without the use of an adhesive. Embodiments of this method may be employed by the joining station of the present invention. Other embodiments of the present invention, however, may also involve an automatic dispensing of suitable adhesives to join the upper and the sole.

In one embodiment, the step (b) may comprise the step of reinforcing a manufactured upper by selectively placing at least one patch onto an upper material. Examples of how this might be done are disclosed in DE 10 2015 224 885 A1, and embodiments of the method described there may be used in conjunction with step (b) of the method according to the present invention.

The at least one patch may, for example, comprise a thermoplastic polyurethane, TPU, material. Furthermore, the at least one patch may comprise a thickness of 10 µm to 5 mm, more preferably 150 - 750 µm. In one embodiment, these values refer to the combined thickness of the patch and the substance (e.g., a hot-melt) used to secure the patch on the upper material. Advantageously, such a method allows the manufacturing of an upper in a particularly flexible manner. The selective placing of at least one patch, i.e. a piece of material, with different shapes and sizes enables the manufacturing of uppers having a wide variety of performance characteristics. The patches may be automatically provided by cutting from a roll of TPU tape on a cutting table thereby simplifying an automated customization of the performance properties of the automatically manufacture shoes.

In one embodiment, the step of selectively placing a patch may comprise providing at least one patch in the heel part of the manufactured upper having a higher stiffness / or higher thickness compared to patches in the midfoot part. Moreover, this step may further comprise providing at least one patch in the forefoot part of the manufactured upper having a lower stiffness and / or lower thickness compared to patches in the midfoot part. The inventors found out that such an automated placement of patches allows to customize the properties of uppers and therefore of the resulting shoes while keeping the production efforts still at a minimum.

In one embodiment, the step of reinforcing the upper by patch placement may comprise the step of consolidating the at least one patch onto the upper material by means of applying heat and pressure.

After the patch placement process and/or the consolidation process are complete, a vision quality check may be performed. A vision quality check is a check in which the quality of the process is judged by optically looking at the result of the process and judging from the appearance of the resultant product whether the process was successfully and satisfactorily performed. This vision quality check may be done by a human or automatically or semi-automatically using cameras and pattern recognition techniques, or the like.

The automated transportation to the joining station may be carried out by at least one robot device. Such a transportation further simplifies the automated manufacturing of a shoe, as also here no human intervention is needed, apart from monitoring and controlling the process and / or to make adjustments in case of an incorrect operation.

In one embodiment, a quality check station performs a further automated quality check of the shoe after the automatically joining of the manufactured sole and the manufactured upper. Again, performing also the final quality control automatically, for example by suitable image processing software, contributes to an overall manufacture that can operate essentially without human interaction for repetitive tasks.

A further aspect of the invention is directed to a shoe manufactured by one of the above described methods.

Finally, according to another aspect the present invention is directed to a system for performing one of the above summarized methods. In one embodiment, the system comprises a first station for automatically manufacturing a plurality of soles, a second station for automatically manufacturing a plurality of uppers, a joining station adapted for automatically joining a sole and an upper, wherein the first and the second station are adapted for operating in parallel and are arranged in a common facility so that a manufactured sole and a manufactured upper can be transported to the joining station and automatically joined there.

As mentioned above, the transportation of the manufactured sole and the manufactured upper to the joining station may be also automated. Or it may be performed semi-automatically (i.e. with some manual support) or completely by humans. Further, the joining station and/or further stations of the system may also be arranged within the common facility to further facilitate automatization of the process, or such stations may be arranged outside the common facility.

### 4. Short description of the figures

Possible embodiments of the present invention are further described in the following detailed description with reference to the following figures:
- Fig. 1:: presents a flow diagram illustrating exemplary method steps for automatically manufacturing shoes, in accordance with certain aspects of the present disclosure; and
- Fig. 2:: presents a schematic view of an exemplary system performing a method for automatically manufacturing shoes, in accordance with certain aspects of the present disclosure.

### 5. Detailed description of possible embodiments

Various embodiments of the present invention are described in the following detailed description. However, emphasis is placed on the fact that the present invention is not limited to these embodiments. The method described herein may be used for the manufacture of shoes in general, such as, for example, for sport shoes, casual shoes, laced shoes or boots such as working boots.

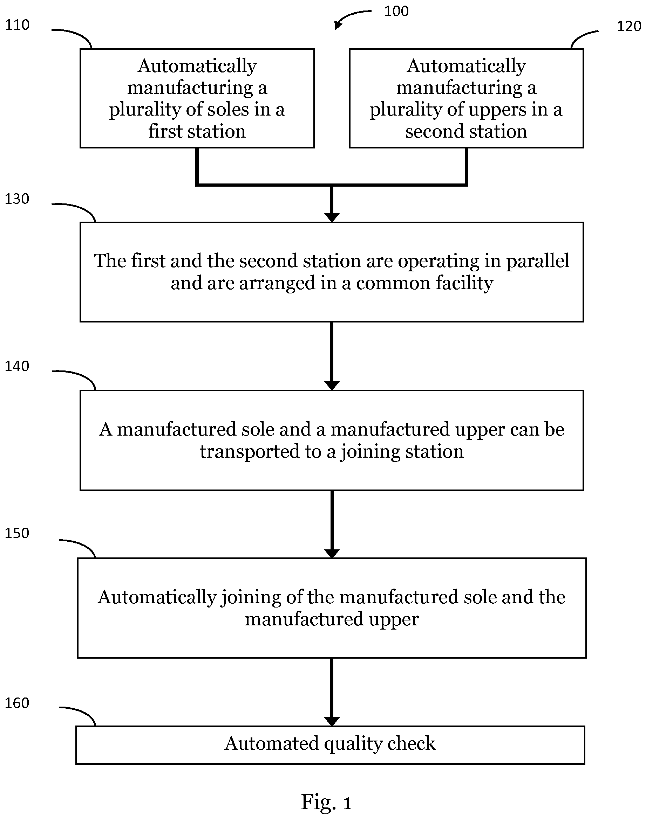

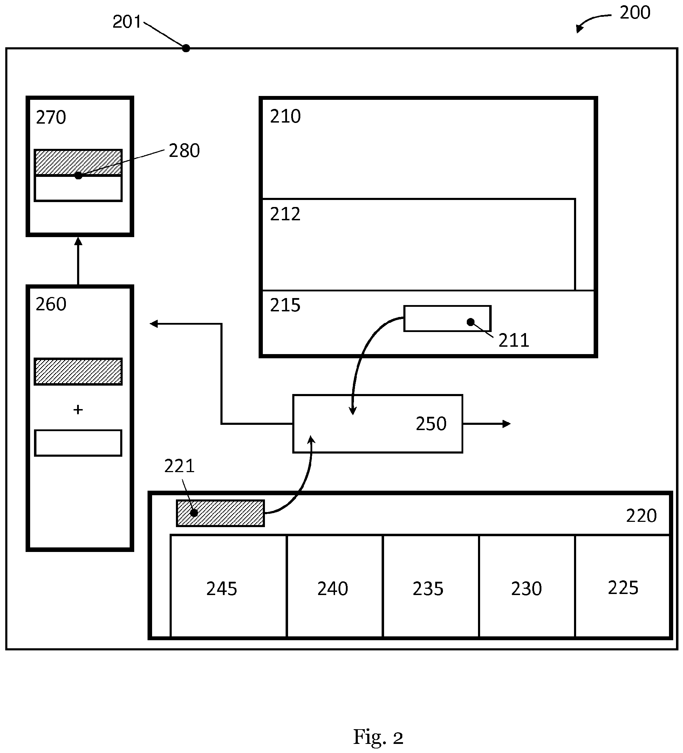

Fig. 1 presents a flow diagram illustrating exemplary method steps 100 for automatically manufacturing shoes in accordance with certain aspects of the present disclosure. The method steps 100 may be performed, for example, by a manufacturing system as schematically presented in Fig. 2 and discussed further below. The method steps 100 begins at step 110 by automatically manufacturing a plurality of soles in a first station. For example, the automated manufacture of the plurality of soles may comprise the step of molding individual soles from a plurality of particles. The particle molding step may be executed fully automated by one or more automated devices.

Moreover, the sole manufacturing step 110 may be controlled by a central computer unit (not shown in Fig. 1) and / or may be set up and supervised by one or more humans.

At step 120, a plurality of uppers is automatically manufactured in a second station. For example, the automated manufacture of the plurality of uppers may comprise the steps of cutting upper pieces from a roll of textile which is produced by a machine, e.g. a knitting machine. Moreover, the plurality of uppers may be reinforced or functionalized by selectively placing at least one patch onto the cut upper piece. Reference is made to DE 10 2015 224 885 showing exemplary methods that may be used in this regard. The at least one patch may be provided by cutting from a roll of material which may comprise a thermoplastic polyurethane, TPU, material. The patch may comprise a thickness of 10 µm to 5 mm, more preferably 150 - 750 µm. In an embodiment, these values may refer to the combined thickness of the patch and the substance (e.g., a hot-melt) used to secure the patch on the upper material. Furthermore, the cutting step may be performed on a cutting table including holes through which air is pulled to generate a vacuum effect and to attach the patch material (not shown in Fig. 1). The cutting may be performed by a laser and the at least one cut patch may be picked up from a gripper, e.g. a coanda gripper. It is also conceivable that the picking up step may be performed by any other type of gripper.

The automated manufacturing steps 110 and 120 for manufacturing a plurality of soles and uppers is performed in step 130 in parallel and in a common facility. As mentioned above, such an operation of the two method steps significantly simplifies the overall manufacture of shoes. For example, the stations may be arranged next to each other in the facility (which could be a factory but also a reserved space in a retail store) so that the manufactured soles and / or uppers may be easily placed on a transportation system.

As in any manufacturing process, there might be soles and / or uppers, which do not meet certain quality criteria. The error rates of the manufacturing steps for the sole and the upper may not be identical, for example if the rate of defect soles is higher than the rate of defect uppers. In one embodiment, the overall method 100 takes such different rates into account by adapting the operating speed of the various steps so that on average essentially the same numbers of non-defect uppers and soles are provided for the further steps described in the following.

As a next step 140, the manufactured soles and uppers may be transported to a joining station. The transport may be performed automatically. An automated transportation may be performed by one or more robots which may operate automatically, again under the control of computer unit, e.g. the same computer unit as mentioned above, and / or may be supervised by one or more humans. To facilitate the automated transportation, the joining station (and also some or all of the other stations) may also be arranged within the common facility. In addition or alternatively, the manufactured soles and / or uppers may be transferred on conveyer belts to the joining station (not shown in Fig. 1).

As a next step 150, the manufactured soles and the manufactured uppers are automatically joined. The automated joining step may be performed by a heat joining process. For example, the material surfaces of the manufactured sole and upper parts may be partly of fully melted using a heat source. Once the components are melted, the heat source may be withdrawn and they may be joined under pressure by one or more robot devices to form the shoe. Reference is once again made to document DE 10 2015 202 014 A1 containing further details on an exemplary method and apparatus which may be used in this context.

At the next step 160, the manufactured shoes may be checked by an automated quality check station performing a final quality check. For example, every shoe may be subjected to an automated optical inspection process involving imaging software. Dynamic testing of the properties of the final shoe is also conceivable, for example by inserting an artificial foot into the final shoe with measurement sensors to measure forces on the foot during a simulated walking or running with the shoe. Since such an automated testing might be time consuming it is also conceivable that only a sample subset of the automatically manufactured shoes is selected for testing.

Finally, the manufactured shoes may be labeled and tagged for further shipping. In addition or alternatively, sockliners and laces may be attached to the manufactured shoes, wherein such post-manufacture steps could also be done manually.

As a result, the method 100 provides for the first time the fully automated manufacture of a plurality of shoes in a common facility.

Fig. 2 presents a schematic view of an embodiment of the present invention for a system 200 for automatically manufacturing a shoe 280. The system 200 may perform one or more of the aforementioned methods, in particular the sequence of method steps 100. It is also conceivable that those methods may be performed by another system for automatically manufacturing a shoe 280. In the following, the automated manufacturing of a single shoe 280 including a sole 211 and an upper 221 is described. The very schematic representation of the two key shoe components shown in Fig. 2 indicates that a wide variety of different uppers 221 and soles 211 can be manufactured by the described system 200, wherein relevant manual work is involved only during the set-up and maintenance of the system 200.

In the embodiment of Fig. 2, the sole 211 is automatically manufactured in a first station 210 and the upper 221 is automatically manufactured in a second station 220, wherein the first station 210 and the second station 220 are operating in parallel and are arranged in a common facility 201. As mentioned above, such a facility 201 may be a factory or even a retail store. Moreover, the common facility 201 may also contain some or all further stations of the system 200. The common facility 201 may, for example, also contain the joining station 260 and the quality check station 270, as shown in Fig. 2. In other embodiments, however, at least some of these further stations may also be arranged outside the common facility 201 (this option is not shown in the figures). If all stations are arranged within a retail store, for example, the whole manufacturing process may become transparent for a customer who just ordered a certain pair of shoes and can then actually see how the pair is produced by watching the operation of the system 200.

At the first station 210, the sole 211 may be individually molded from a plurality of particles in a molding station 212 including a sole mold which may comprise two or more parts. The mold parts may be movable to close the sole mold prior to a step of filling it with a plurality of individual particles. Moreover, a medium may be supplied to bond and / or fuse the particles with each other and optionally also directly with an outsole element to form the sole 211. In addition, at least one supporting element (not shown in Fig. 2) may be placed in the sole mold to be integrated into the sole 211 to provide special sole properties such as selective support against pronation or supination. The medium for bonding or fusing the particles is in one embodiment nontoxic and does not cause any harm to the facility and its environment. Water vapor is an example for such a medium. Of course, toxic materials may also be involved provided as the system 200 is suitably adapted, for example by means for capturing essentially all toxic emissions from the system.

In one embodiment, the sole mold may comprise at least one first opening arranged in one or in both parts of the sole mold for supplying the particles. Providing more than one first opening may further accelerate the supply of the particles into the respective mold and thus increase the throughput. In addition or alternatively, it is also conceivable that the first opening could be provided simply by opening a gap between the two parts of the mold and filling the particles through the gap. In addition to defining the form of the molded sole the station 210 may also create a certain compression of the molded sole to assure desired dynamic properties such as bending stiffness or cushioning under foot strike.

In one embodiment, the particles may be made from an expanded material such as expanded thermoplastic polyurethane (eTPU). It is also conceivable that any other appropriate material may be used. Furthermore, the expanded particles may be randomly arranged or with a certain pattern inside the mold.

Moreover, in the embodiment shown in Fig. 2, the first station 210 comprises an automated quality check station 215 for the manufactured sole 211. However, in other embodiments the quality check station 215 may also be arranged at a different position within the system 200, for example between the first station 210 and the joining station 260.

The automated quality check station 215 may involve an automated inspection of the manufactured sole 211. It may check whether the sole is within defined tolerances, e.g. with regard to weight and/or size and/or shape and/or color. For example, if the manufactured sole 211 is incorrectly molded, e.g. having an undesired shape or weight due to too many or too less particles, the automated quality check station 215 may detect such a deficiency and can remove the defect sole from the manufacturing process. The automated weight measurement may be performed by means of measurement devices, e.g. a balance. Dynamic testing of the sole as mentioned already above is also possible. As explained before, the error rate of the whole manufacturing process in a common facility 201 and possible manufacturing waste is significantly minimized if such an automated quality check is already included in the first station 210. Finally, the checked sole 211 is handed over to a robotic device 250.

In the embodiment in Fig. 2, the second station 220 for automatically manufacturing the upper 221 may comprise a cutting station 225 for cutting the upper piece, a patch preparation station 230, a patch placement station 235 for selectively placing at least one patch onto the upper piece, a consolidation station 240 for consolidating the at least one patch on the surface of the upper piece and a stitching station 245 for stitching the consolidated upper piece from a two-dimensional surface to a three-dimensional upper. All of these stations may be connected with a transport device, e.g. a conveyer belt.

The cutting station 225 may cut a textile material which may be delivered from a roller into an upper piece on a cutting table. As mentioned-above, the textile material may comprise thermoplastic polyurethane (TPU). Other materials such as polyamides (PA) or polyetherblockamide (PEBA) are also conceivable. The textile material may also be a knit material, for example a textile material knitted with a polyester yarn. The cutting station 225 may include a knitting machine (not shown) to provide a roll of the textile material for the upper piece.

The patch preparation station 230 may provide at least one patch comprising for example a TPU material and having a thickness of 10 µm to 5 mm, more preferably 150 - 750 µm, which is selectively placed onto the upper piece at the next station. For example, a roll of tape comprising such a TPU material may be wound on rollers and pulled on to a cutting table. As mentioned-above with respect to method step 120, the cutting table may include holes through which air may be pulled to generate a vacuum for holding the TPU tape. A laser, e.g. a carbon dioxide laser, may cut the at least one patch form the TPU tape and the at least one cut patch may be attached on the cutting table by the vacuum. After the TPU tape may be cut to form a patch, the excess tape can lifted away and wound on rollers. The at least one patch remaining on the cutting table may be picked up by a gripping device, e.g. a coanda gripper.

The patch placement station 235 may selectively place the at least one patch onto the upper piece. For example, vacuum grippers on a robotic arm may grab and move the at least one cut patch. Moreover, the patch placement station 235 may comprise a vision system including hardware such as cameras and software for detecting the position of the at least one patch.

The patch may be secured on the upper piece in form of a two-layer construction, wherein the patch forms one of the layers and the second layer is formed by a substance which is used to secure the patch on the upper, for example a hot-melt material. The above mentioned thickness values may then concern the combined thickness of the (consolidated) two-layer construction. In such a case, the patch itself may, for example, have a thickness in the range of 190 - 600 µm.

In one embodiment, at least one patch may be provided in the heel part of the upper piece having a higher stiffness and / or higher thickness compared to patches in the midfoot part. Advantageously, such placed patches may create selective bending stiffness and heel fit for the manufactured shoe in order to lock the foot of a wearer down.

In one embodiment, at least one patch may be provided in the forefoot part of the upper piece having a lower stiffness and / or lower thickness compared to patches in the midfoot part. Advantageously, such patches may allow expansion and avoid creases and / or pressure points. As a result, the selective placement of the at least one patch provides a functionalized upper piece for a manufactured shoe 280.

The consolidation station 240 may consolidate the at least one placed patch with the cut upper piece, i.e. may create a bonding between them, by means of applying heat and pressure. In one embodiment, the consolidating and bonding may be carried out by one or several of the following processing steps: gluing, welding, high frequency welding, ultrasonic welding, laser welding, crimping, sewing, screwing, riveting, fusing, clipping, sealing, subjecting to a heat pressure treatment, exposing to a steam treatment. As already hinted at above, another possible option is to use a meltable layer or hot-melt layer to effect the bonding between the patch and the upper, as for example described in more detail in the above mentioned DE 10 2015 224 885 A1. Advantageously, the overall manufacturing is full automated and therefore significantly simplified.

The stitching station 245 may form a three-dimensional upper 221 from the consolidated two-dimensional upper piece and may stich it together. For example, the forming and stitching step may comprise at least one of hole punching, tongue cutting and / or stitching, board lasting, strobeling, vamp stitching, heel forming, heel gathering tongue taping, collar and / or heel lining edge taping, toe gathering and toe forming. In one embodiment, a combination of board lasting and strobeling is used. Finally, the manufactured upper 221 is placed on the robot device 250.

After the patch placement process and/or the consolidation process and/or the stitching process are completed, a further quality check may be performed. Such a quality check can be a simple vision quality check to ascertain whether the patches are placed correctly (e.g., with regard to position, number, correct type, color, thickness, and so forth) via a simple vision system. The quality check may also be partly or fully automated.

As schematically shown in Fig. 2, the robot device 250 transports the manufactured sole 211 and the manufactured upper 221 to a joining station 260. The joining station 260 automatically joins the manufactured sole 211 and the manufactured upper 221 by means of applying heat. For example, heat may be provided by an infrared "IR" source or a similar energy source. In one embodiment, the joining step is performed by directly welding the material of the upper 221 onto the material of the sole 211, i.e. without the use of an adhesive. This is possible as the manufactured sole 211 and the manufactured upper 221 may comprise the material from the same or a similar material class, e.g. TPU. Therefore, the two surfaces may be melted and pressed together for a pre-determined duration and with a certain pressure in order to produce a stable and durable connection and thus the manufactured shoe 280.

In the embodiment in Fig. 2, the automatically manufactured shoe 280 may be transported to a quality check station 270 and may be automatically checked in a final quality check. For example, the manufactured shoe 280 may be subjected to a metal detection process in order to detect whether there may be some metal parts, e.g. needles from stitching, inside the manufactured shoe 280. As mentioned above, the station 270 may also involve a dynamic testing of all or a sample set of the produced shoes. It is also conceivable that the manufactured shoe 280 may be labeled and tagged for further shipping by the quality check station 270. In addition or alternatively, sockliners and laces may be attached to the manufactured shoe 280.

As the shoe 280 is automatically manufactured, its properties are by far more consistent than for a shoe manufactured according to known techniques involving a high amount of manual labor. As no manually performed repetitive tasks are involved in the manufacture of the shoe, product deviations in the manufactured shoe are extremely rare.

## Claims

1. Method (100) for automatically manufacturing a shoe (280) comprising the steps of:
a. automatically manufacturing (110) a plurality of soles (211) in a first station (210);
b. automatically manufacturing (120) a plurality of uppers (221) in a second station (220);
c. wherein the first (210) and the second station (220) are operating in parallel and are arranged in a common facility (201) so that a manufactured sole (211) and a manufactured upper (221) can be transported (140) to a joining station (260) and automatically joined (150) there;
d. wherein a first number of soles (211) manufactured in step a. corresponds to a second number of uppers (221) manufactured in step b.; and
e. wherein the correspondence between the first number and the second number takes a percentage of defective soles and / or defective uppers into account.

2. Method (100) according to claim 1, wherein the automatical manufacture of the plurality of soles (211) in the first station (210) comprises molding (212) individual soles from a plurality of particles.

3. Method (100) according to claim 1 or 2, further comprising an automated quality check (215) of the manufactured soles (211).

4. Method (100) according to claim 3, wherein the automated quality check (215) involves an automated measurement of the weight and / or the size of the manufactured sole (211).

5. Method (100) according to one of the preceding claims 1 - 4, wherein the joining station (260) automatically joins a manufactured sole (211) and a manufactured upper (221) by means of applying heat.

6. Method (100) according to the preceding claim 5, wherein the step of automatically joining is performed without an adhesive, preferably by directly welding the material of the upper onto the material of the sole.

7. Method (100) according to one of the preceding claims 1 - 6, wherein the transportation (140) to the joining station (260) is automated.

8. Method (100) according to claim 7, wherein the automated transportation (140) to the joining station (260) is carried out by at least one robot device (250).

9. Method (100) according to one of the preceding claims 1 - 8, wherein a quality check station (270) performs an automated quality check after the automatically joining (150) of the manufactured sole (211) and the manufactured upper (221).

10. System (200) for performing a method according to any of the preceding claims comprising:
a. a first station (210) for automatically manufacturing (110) a plurality of soles (211);
b. a second station (220) for automatically manufacturing (120) a plurality of uppers (221);
c. a joining station (260) adapted for automatically joining (150) a sole (211) and an upper (221);
d. wherein the first (210) and the second station (221) are adapted for operating in parallel and are arranged (130) in a common facility (201) so that a manufactured sole (211) and a manufactured upper (221) can be transported (140) to the joining station (260) and automatically joined (150) there;
e. wherein a first number of soles (211) manufactured in step a. corresponds to a second number of uppers (221) manufactured in step b.; and
f. wherein the correspondence between the first number and the second number takes a percentage of defective soles and / or defective uppers into account.

## Patentansprüche

1. Verfahren (100) zum automatischen Herstellen eines Schuhs (280) aufweisend die Schritte:
a. automatisches Herstellen (110) einer Vielzahl von Schuhsohlen (211) an einer ersten Station (210);
b. automatisches Herstellen (120) einer Vielzahl von Schuhoberteilen (221) an einer zweiten Station (220);
c. wobei die erste (210) und die zweite Station (220) parallel betrieben werden und in einer gemeinsamen Anlage (201) angeordnet sind, sodass eine hergestellte Schuhsohle (211) und ein hergestelltes Schuhoberteil (221) zu einer Verbindungsstation (260) transportiert werden können (140) und dort automatisch verbunden werden können (150);
d. wobei eine erste Anzahl von Schuhsohlen (211), welche in Schritt a. hergestellt werden, einer zweiten Anzahl von Schuhoberteilen (221), welche in Schritt b. hergestellt wurden, entspricht; und
e. wobei die Entsprechung zwischen der ersten Anzahl und der zweiten Anzahl einen Prozentanteil von defekten Schuhsohlen und/oder defekten Schuhoberteilen berücksichtigt.

2. Verfahren (100) nach Anspruch 1, wobei die automatische Herstellung der Vielzahl von Schuhsohlen (211) an der ersten Station (210) aufweist Formen (212) individueller Schuhsohlen von einer Vielzahl von Partikeln.

3. Verfahren (100) nach einem der Ansprüche 1 oder 2, weiter aufweisend eine automatische Qualitätskontrolle (215) der hergestellten Schuhsohlen (211).

4. Verfahren (100) nach Anspruch 3, wobei die automatische Qualitätskontrolle (215) eine automatische Messung des Gewichts und/oder der Größe der hergestellten Schuhsohle (211) miteinbezieht.

5. Verfahren (100) nach einem der vorhergehenden Ansprüche 1-4, wobei die Verbindungsstation (260) automatisch eine hergestellte Schuhsohle (211) und ein hergestelltes Schuhoberteil (221) mittels Anwenden von Hitze herstellt.

6. Verfahren (100) nach Anspruch 5, wobei der Schritt des automatischen Verbindens ohne einen Klebstoff durchgeführt wird, vorzugsweise durch direktes Schweißen des Materials des Schuhoberteils auf das Material der Schuhsohle.

7. Verfahren (100) nach einem der vorhergehenden Ansprüche 1-6, wobei der Transport (140) zu der Verbindungsstation (260) automatisiert ist.

8. Verfahren (100) nach Anspruch 7, wobei der automatische Transport (140) zu der Verbindungsstation (260) ausgeführt wird durch zumindest eine Robotereinrichtung (250).

9. Verfahren (100) nach einem der vorhergehenden Ansprüche 1-8, wobei eine Qualitätskontrollstation (270) eine automatische Qualitätskontrolle nach dem automatischen Verbinden (150) der hergestellten Schuhsohle (211) und dem hergestellten Schuhoberteil (221) durchführt.

10. System (200) zum Durchführen eines Verfahrens nach irgendeinem der vorhergehenden Ansprüche aufweisend:
a. eine erste Station (210) zum automatischen Herstellen (110) einer Vielzahl von Schuhsohlen (211);
b. eine zweite Station (220) zum automatischen Herstellen (120) einer Vielzahl von Schuhoberteilen (221);
c. eine Verbindungsstation (260) dazu geeignet zum automatischen Verbinden (150) eine Schuhsohle (211) und eines Schuhoberteils (221);
d. wobei die erste (210) und die zweite Station (220) dazu geeignet sind parallel betrieben zu werden und in einer gemeinsamen Anlage (201) angeordnet sind (130), sodass eine hergestellte Schuhsohle (211) und ein hergestelltes Schuhoberteil (221) zu einer Verbindungsstation (260) transportiert werden können (140) und dort automatisch verbunden werden können (150);
e. wobei eine erste Anzahl von Schuhsohlen (211), welche in Schritt a. hergestellt werden, einer zweiten Anzahl von Schuhoberteilen (221), welche in Schritt b. hergestellt wurden, entspricht; und
f. wobei die Entsprechung zwischen der ersten Anzahl und der zweiten Anzahl einen Prozentanteil von defekten Schuhsohlen und/oder defekten Schuhoberteilen berücksichtigt.

## Revendications

1. Procédé (100) pour la fabrication automatisée d'une chaussure (280), comprenant les étapes suivantes :
a. fabrication automatisée (110) d'une pluralité de semelles (211) sur un premier poste (210) ;
b. fabrication automatisée (120) d'une pluralité de tiges (221) sur un second poste (220) ;
c. dans lequel le premier (210) et le second poste (220) opèrent en parallèle et sont situés dans un atelier commun (201) de manière à pouvoir transporter (140) une semelle fabriquée (211) et une tige fabriquée (211) vers une station de montage (260) et les y monter automatiquement (150) ;
d. dans lequel un premier nombre de semelles (211) fabriquées à l'étape a. correspond à un second nombre de tiges (221) fabriquées à l'étape b. ; et
e. dans lequel la correspondance entre le premier nombre et le second nombre tient compte d'un pourcentage de semelles défectueuses et/ou de tiges défectueuses.

2. Procédé (100) selon la revendication 1, dans lequel la fabrication automatisée de la pluralité de semelles (211) sur le premier poste (210) comprend le moulage (212) de semelles individuelles à partir d'une pluralité de particules.

3. Procédé (100) selon la revendication 1 ou 2, comprenant en outre un contrôle de qualité automatisé (215) des semelles fabriquées (211).

4. Procédé (100) selon la revendication 3, dans lequel le contrôle de qualité automatisé (215) prend en compte une mesure automatisée du poids et/ou de la taille de la semelle fabriquée (211).

5. Procédé (100) selon l'une des revendications précédentes 1 à 4, dans lequel le poste de montage (260) monte automatiquement une semelle fabriquée (211) avec une tige fabriquée (211) au moyen d'une application de chaleur.

6. Procédé (100) selon la revendication précédente 5, dans lequel l'étape de montage automatisé est effectuée sans adhésif, de préférence par soudure directe du matériau de la tige sur le matériau de la semelle.

7. Procédé (100) selon l'une des revendications précédentes 1 à 6, dans lequel le transport (140) au poste de montage (260) est automatisé.

8. Procédé (100) selon la revendication 7, dans lequel le transport automatisé (140) au poste de montage (260) est effectué par au moins un dispositif robotisé (250).

9. Procédé (100) selon l'une des revendications précédentes 1 à 8, dans lequel un poste de contrôle de qualité (270) effectue un contrôle de qualité automatisé après le montage automatisé (150) de la semelle fabriquée (211) avec la tige fabriquée (221).

10. Système (200) pour la mise en oeuvre d'un procédé selon l'une des revendications précédentes, comprenant :
a. un premier poste (210) pour la fabrication automatisée (110) d'une pluralité de semelles (211) ;
b. un second poste (220) pour la fabrication automatisée (120) d'une pluralité de tiges (221) ;
c. une station de montage (260) adaptée au montage automatisé (150) d'une semelle (211) avec une tige (221) ;
d. dans lequel le premier (210) et le second poste (220) sont adaptés pour opérer en parallèle et sont situés (130) dans un atelier commun (201) de manière à pouvoir transporter (140) une semelle fabriquée (211) et une tige fabriquée (211) vers la station de montage (260) et les y monter automatiquement (150).
